(19) Europäisches Patentamt
European Patent Office
Office européen des brevets

(11) EP 0 827 166 A1

(12) **EUROPÄISCHE PATENTANMELDUNG**

(43) Veröffentlichungstag:
04.03.1998 Patentblatt 1998/10

(51) Int. Cl.⁶: **H01G 4/12**

(21) Anmeldenummer: 97202578.7

(22) Anmeldetag: 21.08.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 31.08.1996 DE 19635406

(71) Anmelder:
• Philips Patentverwaltung GmbH
22335 Hamburg (DE)
Benannte Vertragsstaaten:
DE
• Philips Electronics N.V.
5621 BA Eindhoven (NL)
Benannte Vertragsstaaten:
FR GB

(72) Erfinder:
• Hansen, Peter, Dr.
Röntgenstrasse 24, 22335 Hamburg (DE)
• Hennings, Detlev, Dr.
Röntgenstrasse 24, 22335 Hamburg (DE)
• Schreinemacher, Baby Seriyati
Röntgenstrasse 24, 22335 Hamburg (DE)

(74) Vertreter:
Volmer, Georg, Dipl.-Ing. et al
Philips Patentverwaltung GmbH,
Röntgenstrasse 24
22335 Hamburg (DE)

(54) **Vielschichtkondensator mit Wolfram-haltigem Batio3**

(57)   Kondensator mit einem keramischen Dielektrikum und mindestens zwei Elektroden, wobei das Dielektrikum im wesentlichen aus einer dielektrischen keramischen Zubereitung mit einem dotierten Barium-Calcium-Zirkon-Titanat besteht, und das dotierte Barium-Calcium-Zirkon-Titanat die Zusammensetzung $(Ba_{0.96}Ca_{0.04})_a[Ti_{0.82-y}Zr_{0.18}Mn_y]O_3$ mit $0.001 \leq y \leq 0.01$, $1.000 < a \leq 1.02$ hat und mit Wolfram in einer Menge r von 0.001 bis 0.005 Mol /Formeleinheit und mit mindestens einem Element A der Gruppe Aluminium, Gallium, Yttrium, Zink, Nickel und Ytterbium in einer Menge s mit 0.001 bis 0.005 Mol/Formeleinheit dotiert ist.

FIG. 1

EP 0 827 166 A1

Printed by Xerox (UK) Business Services
2.15.11/3.4

**Beschreibung**

Gegenstand der Erfindung ist ein Kondensator, insbesondere ein Vielschichtkondensator mit inneren Elektroden aus Unedelmetallen, mit einem keramischen Dielektrikum und mindestens zwei Elektroden, wobei das Dielektrikum im wesentlichen aus einer dielektrischen Zusammensetzung mit einem dotierten Barium-Calcium-Zirkon-Titanat besteht.

Keramische Vielschichtkondensatoren werden üblicherweise hergestellt, indem man Schichten für das Dielektrikum aus einer grünen dielektrischen keramischen Zubereitung abwechselnd mit Schichten aus einer Metallpaste für die inneren Elektroden übereinanderstapelt und anschließend den Stapel aus Keramik- und Metallschichten sintert.

Die Qualität von Vielschichtkondensatoren wird sowohl durch die chemische Zusammensetzung des Materials für das Dielektrikums bzw. für die Elektroden als auch durch die Herstellungsbedingungen bestimmt. Bei den Herstellungsbedingungen spielen vor allem die Sinterungsbedingungen eine Rolle. Abhängig von der Sinteratmosphäre können bei der Sinterung verschiedene, gegenläufige Oxidations- und Reduktionsreaktionen ablaufen. Beim Sintern in reduzierender Atmosphäre werden Bariumtitanat und seine Derivate, z.B. die dotierten Barium-Calcium-Zirkon-Titanate, halbleitend. Sie sind in diesem Zustand als Dielektrikum ungeeignet. Die Sinterung der Vielschichtkondensatoren unter oxidierenden Bedingungen kann nur dann erfolgen, wenn das Elektrodenmaterial aus Rhodium, Palladium oder Platin besteht. Rhodium und Platin sind jedoch sehr teuer, ihr Anteil an den Herstellungskosten kann bis zu 50% betragen. Die Entwicklung geht daher dahin, statt Rhodium und Platin das sehr viel billigere Nickel oder dessen Legierungen zu verwenden. Nickel oxidiert jedoch bei einer Sinterung unter oxidierenden Bedingungen, deshalb müssen Vielschichtkondensatoren mit Nickelelektroden in inerter oder leicht reduzierender Atmosphäre gesintert werden. An sich würde bei einer reduzierenden Sinterung das vierwertige Titan im Bariumtitanat zu dreiwertigem reduziert, wodurch der Isolationswiderstand der Kondensatoren extrem erniedrigt wird. Inzwischen ist es aber gelungen, die Reduzierbarkeit des Titans im Bariumtitanat durch Dotierung mit Additiven, die Akzeptoren sind, wie $Cr_2O_3$, $Co_2O_3$ oder MnO, abzuschwächen.

Durch diese Dotierungen läßt es sich aber nicht verhindern, daß während des Sinterprozesses in reduzierender Atmosphäre Sauerstoffleerstellen im Kristall entstehen, die die Lebensdauer der Kondensatoren drastisch verkürzen. Die Sauerstoffleerstellen haben eine hohe Beweglichkeit im Kristallgitter und wandern unter dem Einfluß von elektrischer Spannung und Temperatur. Dadurch verringert sich mit der Zeit der Isolationswiderstand.

Die Bildung von Sauerstoffleerstellen kann teilweise rückgängig gemacht werden, wenn die Kondensatoren nach dem Sintern in reduzierender Atmosphäre noch einmal in schwachoxidierender Atmosphäre bei Temperaturen zwischen 600°C und 1100°C getempert werden. Dabei füllen sich die Sauerstoffleerstellen im Gitter wieder auf. Nachteil der Temperung ist die deutliche Abnahme der Dielektrizitätskonstante $\varepsilon$ und der negative Einfluß auf die $\Delta$ C/ $\Delta$t - Kurve, d.h. auf die Temperaturabhängigkeit der Dielektrizitätskonstante.

Um diese komplexen Schwierigkeiten bei der Herstellung von keramischen Kondensatoren mit Unedelmetallelektroden zu überwinden, wird von der US 5,319,517 ein keramischer Vielschichtchipkondensator mit inneren Elektroden und dielektrischen Schichten vorgeschlagen, dessen dielektrisches Material ein dielektrisches Oxid enthält, das die folgende Zusammensetzung hat: $[(Ba_{1-x-y}Ca_xSr_y)O]_m(Ti_{1-x}Zr_x)O_2$, wobei $0 \le x \le 0,25$, $0 \le y \le 0,05$, $0,1 \le z \le 0,3$ und $1,000 \le m \le 1,020$ ist und dem ein Manganoxid und/oder eine Verbindung, die beim Brennen in das Oxid umgewandelt wird, in einer Menge von 0,01 bis 0,5 Gew.-%, berechnet als Oxid (MnO), ein Yttriumoxid und/oder eine Verbindung, die beim Brennen in das Oxid umgewandelt wird, in einer Menge von 0,05 bis 0,5 Gew.-%, berechnet als Oxid ($Y_2O_3$), ein Vanadinoxid und/oder eine Verbindung, die beim Brennen in das Oxid umgewandelt wird, in einer Menge von 0,005 bis 0,3 Gew.-%, berechnet als Oxid ($V_2O_5$), ein Wolframoxid und/oder eine Verbindung, die beim Brennen in das Oxid umgewandelt wird, in einer Menge von 0,005 bis 0,3 Gew.-%, berechnet als Oxid (MnO), zugefügt ist und dessen Material für die inneren Elektroden Nickel oder eine Nickellegierung ist. Die ständig steigenden Anforderungen an Lebensdauer und Zuverlässigkeit können diese Vielschichtkondensatoren jedoch noch nicht erfüllen.

Es ist daher die Aufgabe der vorliegenden Erfindung, einen keramischen Kondensator, insbesondere einen Vielschichtkondensator mit Elektroden aus Unedelmetallen, zu schaffen, mit einem keramischen Dielektrikum und mindestens zwei Elektroden, wobei das Dielektrikum im wesentlichen aus einer dielektrischen keramischen Zubereitung mit einem dotierten Barium-Calcium-Zirkon-Titanat besteht, der sich durch eine verlängerte Lebensdauer, größere Zuverlässigkeit, eine hohe Dielektrizitätskonstante und eine niedrige Temperaturabhängigkeit der Dielektrizitätskonstanten über einen weiten Temperaturbereich auszeichnet.

Erfindungsgemäß wird die Aufgabe gelöst durch einen Kondensator mit einem keramischen Dielektrikum und mindestens zwei Elektroden, wobei das Dielektrikum im wesentlichen aus einer dielektrischen keramischen Zubereitung mit einem dotierten Barium-Calcium-Zirkon-Titanat besteht, der dadurch gekennzeichnet ist, daß das dotierte Barium-Calcium-Zirkon-Titanat die Zusammensetzung $(Ba_{0.96}Ca_{0.04})_a[Ti_{0.82-y}Zr_{0.18}Mn_y]O_3$ mit $0.001 \le y \le 0.01$, $1.00 < a \le 1.02$ hat und mit Wolfram in einer Menge r von 0.001 bis 0.005 Mol /Formeleinheit und mit mindestens einem Element A aus der Gruppe Aluminium, Gallium, Yttrium, Zink, Nickel und Ytterbium in einer Menge s mit 0.001 bis 0.005 Mol/Formeleinheit dotiert ist. Er zeichnet sich durch eine hohe Dielektrizitätskonstante ε bei gleichzeitig hoher Stabilität des Kapazitätswertes, niedrigem Verlustfaktor, hohem Isolationswiderstand und einer wenig spannungsunabhängigen Kapazität aus. Die Temperaturabhängigkeit seiner Dielektrizitätszahl ε entspricht der EIA- Norm Y5V. Der Einsatzbereich umfaßt insbesondere Kopplung und Entkopplung sowie die Funkentstörung bei Kleinspannungsanwendungen.

Im Rahmen der vorliegenden Erfindung ist es bevorzugt, daß das Material für die Elektroden Nickel oder eine Nickellegierung ist.

Es ist besonders bevorzugt, daß der Kondensator ein Vielschichtkondensator mit inneren Elektroden aus Nickel oder einer Nickellegierung ist.

Es ist weiterhin bevorzugt, daß $y \leq 0.005$ und das atomare Verhältnis n von $(y + s) / r$ größer 1 ist. Durch dieses atomare Verhältnis zwischen Mangan, Yttrium und Wolfram mit einem ausgewogenen Verhältnis von Donatoren und Akzeptoren wird eine geringe Ionenbeweglichkeit und damit eine besonders hohe Lebensdauer bei hohen Temperauren und elektrischen Feldern erreicht. Gleichzeitig ist die Akzeptorkonzentration hoch genug, um die Redoxreaktionen bei der Sinterung des Vielschichtkondensators mit Unedelmetallelektroden kontrollierbar zu machen und um ein gutes Kornwachstum zu erreichen.

Es ist besonders bevorzugt, daß $y \leq 0.005$, $1 < a= 1.01$, $r = 0.0025$ Mol/Formeleinheit und $s <0,010$ Mol/Formeleinheit ist. Mit dieser Zusammensetzung des Barium-Calcium-Zirkon-Titanates wird ein optimales Kornwachstum und ein hohes dielektrisches Maximum bei Raumtemperatur erreicht.

Es kann ebenfalls bevorzugt sein, daß die dielektrische keramische Zubereitung 0,1 - 1 Gew.-% Sinterhilfsmittel, bestehend aus 0,16 bis 0,29 Mol Lithiumoxid, 0, 004 bis 0,39 Mol eines der Oxide CaO, MgO, BaO oder SrO sowie Siliziumoxid, enthält. Durch Zugabe dieses Gemisches kann die Sintertemperatur auf 1150°C gesenkt werden.

Nachfolgend wird die Erfindung anhand einer Figur und von Beispielen weiter erläutert.

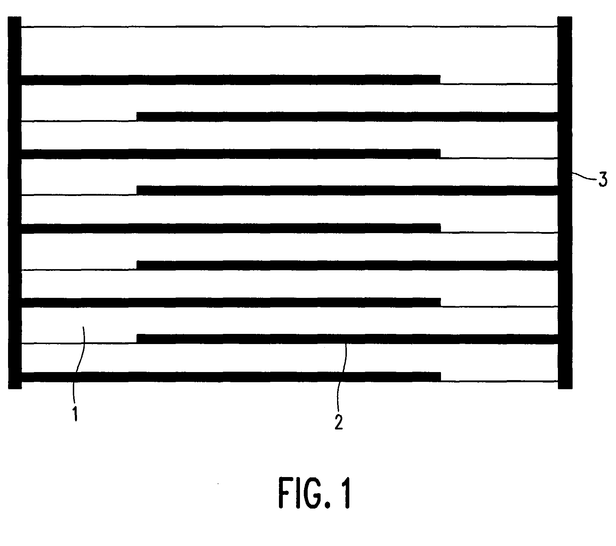

**Fig. 1** zeigt die Querschnittsansicht einer Ausführungsform des erfindungsgemäßen Kondensators. In dieser bevorzugten Ausführungsform ist der erfindungsgemäße Kondensator ein Vielschichtkondensator.

Der erfindungsgemäße keramische Vielschichtkondensator umfaßt ein keramisches Dielektrikum **1**, das aus einer Vielzahl von oxidischen dielektrischen Schichten mit einer Dicke von nicht mehr als 50μ besteht, sowie einer Vielzahl von inneren Elektroden **2**, die schichtförmig in dem Dielektrikum übereinander angeordnet sind und sich abwechselnd zu zwei gegenüberliegenden Endflächen des Dielektrikums erstrekken. Auf den Endflächen des keramischen Dielektrikums sind metallische Kontaktelektroden **3** als äußere Anschlüsse vorgesehen, die mit den entsprechenden inneren metallischen Elektroden verbunden sind.

Die Herstellung erfolgt nach den üblichen Fertigungstechniken für keramische Kondensatoren, wobei je nach der gewünschten Form und den Abmessungen, der angestrebten Genauigkeit und der späteren Verwendung zahlreiche Herstellungsvarianten möglich sind.

Material für das keramische Dielektrikum ist eine dielektrische keramische Zubereitung mit einem dotierten Barium-Calcium-Zirkon-Titanat mit der Zusammensetzung $(Ba_{0.96}Ca_{0.04})_a[Ti_{0.82-y}Zr_{0.18}Mn_y]O_3$ mit $0.001 \leq y \leq 0.01$, $1.000 < a \leq 1.02$ und das mit Wolfram in einer Menge r von 0.001 bis 0.005 Mol /Formeleinheit und Yttrium in einer Menge s mit 0.001 bis 0.005 Mol/Formeleinheit dotiert ist.

Vorzugsweise enthält die dielektrische keramische Zubereitung $SiO_2$ als Sinterhilfsmittel. Für ein erfindungsgemäßes Barium-Calcium-Zirkon-Titanat mit $a= 1,005$ wird der Zubereitung 0,125 Gew.-% $SiO_2$, für $a= 1,01$ wird 0,25 Gew.-% $SiO_2$ zugefügt. Alternativ zu dieser Standardsinterhilfe kann der Mischung auch 0,1 - 1 Gew.-% Sinterhilfsmittel, bestehend aus 0,16 bis 0,29 Mol Lithiumoxid, 0, 004 bis 0,39 Mol eines der Oxide CaO, MgO, BaO oder SrO sowie Siliziumoxid, zugefügt werden. Durch dieses Sinterhilfsmittel kann die Sintertemperatur von 1300°C auf 1150°C gesenkt werden.

Die Materialauswahl für die Elektroden unterliegt keinen besonderen Beschränkungen, sodaß man hierfür ein Metall oder eine Kombination von zwei oder mehreren üblicherweise angewandten Metallen verwenden kann. Die Elektroden können aus Edelmetallen, wie Platin, Palladium, Gold oder Silber bestehen. Sie können auch Chrom, Zirkonium, Vanadium, Zink, Kupfer, Zinn, Blei, Mangan, Molybdän, Wolfram, Titan oder Aluminium enthalten. Bevorzugt bestehen sie aus einem Nichtedelmetall, ausgewählt aus der Gruppe Nickel, Eisen, Cobalt und deren Legierungen.

Die Herstellung der dielektrischen keramischen Zubereitung kann nach den üblichen Methoden zur Pulverherstellung, z.B. durch das Mischoxid-Verfahren, Copräzipitation, Sprühtrocknung, Sol/Gel-Verfahren, Hdrothermalverfahren oder Alkoxid-Verfahren erfolgen. Bevorzugt ist das Mischoxid-Verfahren, bei dem die Ausgangsoxide oder thermisch zersetzbare Verbindungen, wie z.B. Carbonate, Hydroxide, Oxalate oder Acetate, gemischt und gemahlen werden. Anschließend wird das Ausgangspulver bei 1000°C bis 1400°C kalziniert.

Für die Formgebung zum Grünkörper können ebenfalls alle üblichen Methoden verwendet werden. Für keramische Kondensatoren in Vielschichttechnologie wird zur Formgebung aus dem kalzinierten Pulver zunächst eine Suspension hergestellt, die neben dem Pulver als weitere Komponente Lösungsmittel, Bindemittel und gegebenenfalls Weichmacher und Dispergierhilfsmittel enthält. Das Lösungsmittel kann beispielsweise Wasser, ein Alkohol, Toluol, Xylol oder Trichloräthylen sein. Als Bindemittel werden üblicherweise organische Polymere wie Polyvinylalkohol, Polyvinylbutyral oder Polymethymetacrylat verwendet. Als Weichmacher kann man Glyzerin, Polyglykole oder Phtalate verwenden. Weiterhin kann man der Suspension Dispergiermittel wie Alkylarylpolyätheralkohole, Polyäthylenglykoläthyläther oder Octylphenoxyäthanol zusetzen.

Aus der Suspension werden nach dem bevorzugten Verfahren durch ein Foliengießverfahren grünen keramischen Folien hergestellt. Bei dem Foliengießverfahren wird die Suspension auf eine sich bewegende Trägeroberfläche gegossen. Nach dem Verdampfen des Lösungsmittels bleibt je nach Bindersystem eine mehr oder weniger flexible Folie zurück, die geschnitten, mit einer Metallpaste im Muster der inneren Elektroden im Siebdruckverfahren bedruckt und laminiert wird. Aus dem Laminat werden die einzelnen Vielschichtkondensatoren ausgeschnitten. Diese werden zunächst in schwach reduzierender Atmosphäre bei Temperaturen zwischen 1100 und 1400 $^{\circ}$C gesintert und anschließend in schwach oxidierender Atmosphäre bei Temperaturen zwischen 600 und 1100$^{\circ}$C getempert. Als schwach reduzierende Atmosphäre kann man mit Wasserdampf gesättigten Stickstoff mit einer Beimengung von 0,5 bis 2 Vol.-% Wasserstoff, als schwach oxidierende Atmosphäre Stickstoff mit 5 ppm bis 100 ppm Sauerstoff verwenden.

Zur Bildung der äußeren Elektroden werden an den Endflächen der Kondensatoren eine Metallpaste, die beispielsweise Nickel enthält, aufgetragen und eingebrannt. Die äußeren Elektroden können aber auch durch Aufdampfen einer Metallschicht, beispielsweise aus Gold, aufgebracht werden.

Das gesinterte keramische Dielektrikum hat eine homogene Mikrostruktur mit Korngrößen unter 5$\mu$m.

Zur Charakterisierung der erfindungsgemäßen Kondensatoren wurden in bekannter Weise die Dielektrizitätskonstante $\varepsilon$ bei 25$^{\circ}$C, der Verlustfaktor tg $\delta$ gemessen. Die Lebensdauer $\tau$ wird in einem beschleunigten Lebensdauertest (ALT) bei 350$^{\circ}$C und 900 V gemessen. Dazu werden mit Elektroden kontaktierte Test-Pillen mit 5 mm Durchmesser und einer Schichtdicke von 0,05 mm hergestellt, auf 350$^{\circ}$C aufgeheizt und es wird Spannung von 1800 V/mm angelegt. Man mißt den Strom, aus dem der Isolationswiderstand berechnet wird. Nach Start des Tests ist der Isolationswiderstand zunächst hoch. Im weiteren bleibt der Isolationswiderstand im wesentlichen konstant auf hohem Niveau. Erst nach einer gewissen charakteristi-schen Degradationszeit beginnt der Isolationswiderstand abzufallen. Der Leckstrom wächst in einer zur bisherigen Meßzeit kurzen Zeit um mehrere Größenordnungen an. Die Lebensdauer $\tau$ ist definiert als die Zeit, in dem der Leckstrom um eine Größenordnung angewachsen ist.

**Ausführungsbeispiel 1**

Für die Herstellung eines Vielschichtkondensators mit einem keramischen Dielektrikum mit der Zusammensetzung $(Ba_{0.96}Ca_{0.04})_{1.005}[Ti_{0.815}Zr_{0.18}Mn_{0.005}]O_3$ mit Wolfram und Yttrium in einer Menge von jeweils 0,0025 Mol/Formeleinheit und 0,125 Gew.-% $SiO_2$ als Sinterhilfe werden 190,40 g $BaCO_3$ ($d_{50}$ = 1,1$\mu$m, BET: 2,1 m$^2$/g), 1,03 g $CaCO_3$ ($d_{50}$ = 0,8$\mu$m), 65,12 g $TiO_2$ ($d_{50}$= 0,48$\mu$m, BET: 7 m$^2$/g), 22,18 g $ZrO_2$ ($d_{50}$ =0,12$\mu$m, BET: 21,9m$^2$/g), 0,57 g $MnCO_3$, 0,58 g $WO_3$ ($d_{50}$ = 0,15$\mu$m), 0,56 g $Y_2O_3$ ($d_{50}$ = 0,34 $\mu$m) und 0,36g $SiO_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen. Nach dem Mahlen in der Planetkugelmühle wird das Gemisch unter einem Oberflächenverdampfer an Luft getrocknet und danach 6h bei 1250$^{\circ}$C kalziniert. Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 $\mu$m.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300$^{\circ}$C gesintert. Die Aufheizrate beträgt 300$^{\circ}$C/h bis 1000$^{\circ}$C und 50$^{\circ}$C/h bis 1300$^{\circ}$C. Während des Sinterprozesses wird durch den Ofen ein Gasgemisch bestehend aus 99 % $N_2$ und 1 % $H_2$ geleitet, das mit Wasserdampf gesättigt ist. Es wird mit 300$^{\circ}$C/h abgekühlt. Nach dem Sintern werden die Kondensatoren in einem Temperofen bei einer Temperatur von 1000$^{\circ}$C getempert. Während des Temperprozesses wird durch den Ofen ein Gasgemisch bestehend aus Stickstoff mit 50 - 100 ppm Sauerstoff geleitet.

Als äußere Elektroden werden eine 6 nm dicke CrNi-Schicht aufgedampft, die mit 0,15 $\mu$m Au beschichtet wird.

Testergebnisse:
$\varepsilon$ = 19000 ; tan $\delta$ < 5%, $\tau$ > 280 h .

**Ausführungsbeispiel 2**

Für die Herstellung eines Vielschichtkondensators mit einem keramischen Dielektrikum mit der Zusammensetzung $(Ba_{0.96}Ca_{0.04})_{1.01}[Ti_{0.8175}Zr_{0.18}Mn_{0.0025}]O_3$ mit Wolfram in einer Menge von 0,0025 Mol/Formeleinheit, Yttrium in einer Menge von 0,005 Mol/Formeleinheit und 0,25 Gew.-% $SiO_2$ als Sinterhilfe werden 191,35 g $BaCO_3$ ($d_{50}$ = 1,1$\mu$m, BET: 2,1 m$^2$/g), 1,04 g $CaCO_3$ ($d_{50}$ = 0,8$\mu$m), 65,32 g $TiO_2$ ($d_{50}$= 0,48$\mu$m, BET: 7

m$^2$/g), 22,18 g ZrO$_2$ (d$_{50}$ =0,12µm, BET: 21,9m$^2$/g), 0,29 g MnCO$_3$, 0,58 g WO$_3$ (d$_{50}$ = 0,15µm), 1,12 g Y$_2$O$_3$ (d$_{50}$= 0,34 µm) und 0,71 g SiO$_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.

Nach dem Mahlen in der Planetkugelmühle wird das Gemisch unter einem Oberflächenverdampfer an Luft getrocknet und danach 6 h bei 1250°C kalziniert. Man mischt das pulverförmige Material mit Polyvinylalkohol als Bindemittel, einem oberflächenaktiven Mittel, einem Dispergiermittel und Wasser zu einer Suspension. Die Suspension verarbeitet man in einer Rakelbeschichtungseinrichtung zu grünen keramischen Folien mit einer Dicke von 20 µm.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/hbis 1300°C. Während des Sinterprozesses wird durch den Ofen ein Gasgemisch bestehend aus 99 % N$_2$ und 1 % H$_2$ geleitet, das mit Wasserdampf gesättigt ist.. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 10 - 50 ppm Sauerstoff geleitet.

Als äußere Elektroden werden eine 6 nm dicke CrNi-Schicht aufgedampft, die mit 0,15 µm Au beschichtet wird.

Testergebnisse:
ε = 21 3000 ; tan δ <5 %, τ > 100 h .

## Ausführungsbeispiel 3

Für die Herstellung eines Vielschichtkondensators mit einem keramischen Dielektrikum mit der Zusammensetzung (Ba$_{0.96}$Ca$_{0.04}$)$_{1.01}$[Ti$_{0.815}$Zr$_{0.18}$Mn$_{0.005}$]O$_3$ mit Yttrium in einer Menge von 0,01 Mol/Formeleinheit, Wolfram in einer Menge von 0,025 Mol/Formeleinheit und 0,125 Gew.-% SiO$_2$ als Sinterhilfe werden 191,35 g BaCO$_3$ (d$_{50}$ = 1,1µm, BET: 2,1 m$^2$/g), 1,04g CaCO$_3$ (d$_{50}$ = 0,8µm), 65,12 g TiO$_2$ (d$_{50}$= 0,48µm, BET: 7 m$^2$/g), 22,18 g ZrO$_2$ (d$_{50}$ =0,12µm, BET: 21,9m$^2$/g), 0,57 g MnCO$_3$, 0,58 g WO$_3$ (d$_{50}$ = 0,15µm), 2,24 g Y$_2$O$_3$ (d$_{50}$ = 0,34 µm) und 0,36g SiO$_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.
Nach dem Mahlen in der Planetkugelmühle wird das Gemisch unter einem Oberflächenverdampfer an Luft getrocknet und danach 6h bei 1250°C kalziniert. Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 µm.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/hbis 1300°C. Während des Sinterprozesses wird durch den Ofen ein Gasgemisch bestehend aus 99 % N$_2$ und 1 % H$_2$ geleitet, das mit Wasserdampf gesättigt ist.. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 50 - 100 ppm Sauerstoff geleitet.

Als äußere Elektroden werden eine 6 nm dicke CrNi-Schicht aufgedampft, die mit 0,15 µm Au beschichtet wird.

Testergebnisse:
ε = 14300 ; tan δ < 5%, τ > 220 h .

## Ausführungsbeispiel 4

Für die Herstellung eines Vielschichtkondensators mit einem keramischen Dielektrikum mit der Zusammensetzung (Ba$_{0.96}$Ca$_{0.04}$)$_{1.01}$[Ti$_{0.815}$Zr$_{0.18}$Mn$_{0.005}$]O$_3$ mit Wolfram und Zink in einer Menge von jeweils 0,0025 Mol/Formeleinheit und 0,125 Gew.-% SiO$_2$ als Sinterhilfe werden 191,35 g BaCO$_3$ (d$_{50}$ = 1,1µm, BET: 2,1 m$^2$/g), 1,04 g CaCO$_3$ (d$_{50}$ = 0,8µm), 65,12 g TiO$_2$ (d$_{50}$= 0,48µm, BET: 7 m$^2$/g), 22,18 g ZrO$_2$ (d$_{50}$ =0,12µm, BET: 21,9m$^2$/g), 0,57 g MnCO$_3$, 0,58 g WO$_3$ (d$_{50}$ = 0,15µm), 0,20 g ZnO und 0,36g SiO$_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.

Nach dem Mahlen in der Planetkugelmühle wird das Gemisch unter einem Oberflächenverdampfer an Luft getrocknet und danach 6h bei 1250°C kalziniert. Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 µm.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/hbis 1300°C. Während des Sinterprozesses wird durch den Ofen ein Gasgemisch bestehend aus 99 % $N_2$ und 1 % $H_2$ geleitet, das mit Wasserdampf gesättigt ist.. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 50 - 100 ppm Sauerstoff geleitet.

Als äußere Elektroden werden eine 6 nm dicke CrNi-Schicht aufgedampft, die mit 0,15 µm Au beschichtet wird.

Testergebnisse:
$\varepsilon$ = 13600 ; tan $\delta$ < 5%, $\tau$ > 150 h .

## Ausführungsbeispiel 5

Für die Herstellung eines Vielschichtkondensators mit einem keramischen Dielektrikum mit der Zusammensetzung $(Ba_{0.96}Ca_{0.04})_{1.01}[Ti_{0.8175}Zr_{0.18}Mn_{0.0025}]O_3$ mit Wolfram in einer Menge von 0,0025 Mol/Formeleinheit, Nickel in einer Menge von 0,0025 Mol/Formeleinheit und 0,25 Gew.-% $SiO_2$ als Sinterhilfe werden 191,35 g $BaCO_3$ ($d_{50}$ = 1,1µm, BET: 2,1 $m^2$/g), 1,04 g $CaCO_3$ ($d_{50}$ = 0,8µm), 65,32 g $TiO_2$ ($d_{50}$= 0,48µm, BET: 7 $m^2$/g), 22,18 g $ZrO_2$ ($d_{50}$ =0,12µm, BET: 21,9$m^2$/g), 0,29 g $MnCO_3$, 0,58 g $WO_3$ ($d_{50}$ = 0,15µm), 0,37NiO und 0,71 g $SiO_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.

Nach dem Mahlen in der Planetkugelmühle wird das Gemisch unter einem Oberflächenverdampfer an Luft getrocknet und danach 6 h bei 1250°C kalziniert. Man mischt das pulverförmige Material mit Polyvinylalkohol als Bindemittel, einem oberflächenaktiven Mittel, einem Dispergiermittel und Wasser zu einer Suspension. Die Suspension verarbeitet man in einer Rakelbeschichtungseinrichtung zu grünen keramischen Folien mit einer Dicke von 20 µm.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/hbis 1300°C. Während des Sinterprozesses wird durch den Ofen ein Gasgemisch bestehend aus 99 % $N_2$ und 1 % $H_2$ geleitet, das mit Wasserdampf gesättigt ist.. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 10 - 50 ppm Sauerstoff geleitet.

Als äußere Elektroden werden eine 6 nm dicke CrNi-Schicht aufgedampft, die mit 0,15 µm Au beschichtet wird.

Testergebnisse:
$\varepsilon$ = 15 800 ; tan $\delta$ <5 %, $\tau$ > 250 h .

## Ausführungsbeispiel 6

Für die Herstellung eines Vielschichtkondensators mit einem keramischen Dielektrikum mit der Zusammensetzung $(Ba_{0.96}Ca_{0.04})_{1.01}[Ti_{0.8175}Zr_{0.18}Mn_{0.0025}]O_3$ mit Wolfram in einer Menge von 0,0025 Mol/Formeleinheit, Ytterbium in einer Menge von 0,005 Mol/Formeleinheit und 0,25 Gew.-% $SiO_2$ als Sinterhilfe werden 191,35 g $BaCO_3$ ($d_{50}$ = 1,1µm, BET: 2,1 $m^2$/g), 1,04 g $CaCO_3$ ($d_{50}$ = 0,8µm), 65,32 g $TiO_2$ ($d_{50}$= 0,48µm, BET: 7 $m^2$/g), 22,18 g $ZrO_2$ ($d_{50}$ =0,12µm, BET: 21,9$m^2$/g), 0,29 g $MnCO_3$, 0,58 g $WO_3$ ($d_{50}$ = 0,15µm), 1,97 g $Yb_2O_3$ und 0,71 g $SiO_2$ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen.

Nach dem Mahlen in der Planetkugelmühle wird das Gemisch unter einem Oberflächenverdampfer an Luft getrocknet und danach 6 h bei 1250°C kalziniert. Man mischt das pulverförmige Material mit Polyvinylalkohol als Bindemittel, einem oberflächenaktiven Mittel, einem Dispergiermittel und Wasser zu einer Suspension. Die Suspension verarbeitet man in einer Rakelbeschichtungseinrichtung zu grünen keramischen Folien mit einer Dicke von 20 µm.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1300°C gesintert. Die Aufheizrate beträgt 300°C/h bis 1000°C und 50°C/hbis 1300°C. Während des Sinterprozesses wird durch den Ofen ein Gasgemisch bestehend aus 99 % $N_2$ und 1 % $H_2$ geleitet, das mit Wasserdampf gesättigt ist.. Es wird mit 300°C/h abgekühlt. Nach dem Sintern werden die Kondensatoren in einem Temperofen bei einer Temperatur von 1000°C getempert. Während des Temperprozesses wird durch den Ofen ein Gasgemisch bestehend aus Stickstoff mit 10 - 50 ppm Sauerstoff geleitet.

Als äußere Elektroden werden eine 6 nm dicke CrNi-Schicht aufgedampft, die mit 0,15 µm Au beschichtet wird.

Testergebnisse:
$\varepsilon$ = 17 000 ; tan $\delta$ <5 %, $\tau$ > 160 h.

## Patentansprüche

1. Kondensator mit einem keramischen Dielektrikum und mindestens zwei Elektroden, wobei das Dielektrikum im wesentlichen aus einer dielektrischen keramischen Zubereitung mit einem dotierten Barium-Calcium-Zirkon-Titanat besteht, <u>dadurch gekennzeichnet</u>, daß das dotierte Barium-Calcium-Zirkon-Titanat die Zusammensetzung $(Ba_{0.96}Ca_{0.04})_a[Ti_{0.82-y}Zr_{0.18}Mn_y]O_3$ $0.001 \leq y \leq 0.01$, $1.000 < a \leq 1.02$ hat und mit Wolfram in einer Menge r von 0.001 bis 0.005 Mol /Formeleinheit und mit mindestens einem Element A der Gruppe Aluminium, Gallium, Yttrium, Zink, Nickel und Ytterbium in einer Menge s mit 0.001 bis 0.005 Mol/Formeleinheit dotiert ist.

2. Kondensator gemäß Anspruch 1,
   <u>dadurch gekennzeichnet</u>,
   daß das Material für die Elektroden Nickel oder eine Nickellegierung ist.

3. Kondensator gemäß Anspruch 1,
   <u>dadurch gekennzeichnet</u>,
   daß er ein Vielschichtkondensator mit inneren Elektroden aus Nickel oder einer Nickellegierung ist.

4. Kondensator gemaß Anspruch 1,
   <u>dadurch gekennzeichnet</u>,
   daß $y \leq 0.005$ und das atomare Verhältnis n von $(y + s) / r$ größer 1 ist.

5. Kondensator gemaß Anspruch 1
   <u>dadurch gekennzeichnet</u>,
   daß $y \leq 0.005$, $1 < a = 1.01$, $r = 0.0025$ Mol/Formeleinheit und $s < 0,010$ Mol/Formeleinheit ist.

6. Kondensator gemäß Anspruch 1,
   <u>dadurch gekennzeichnet</u>,
   daß die dielektrische keramische Zubereitung 0,1 - 1 Gew.-% Sinterhilfsmittel, bestehend aus 0,16 bis 0,29 Mol Lithiumoxid, 0,004 bis 0,39 Mol eines der Oxide CaO, MgO, BaO oder SrO sowie Siliziumoxid, enthält.

FIG. 1

Europäisches
Patentamt

**EUROPÄISCHER RECHERCHENBERICHT**

Nummer der Anmeldung

EP 97 20 2578

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | US 5 319 517 A (TAKESHI NOMURA ET AL.)<br>* Zusammenfassung *<br>* Spalte 4, Zeile 47 - Spalte 5, Zeile 63 *<br>----- | 1-3,6 | H01G4/12 |
| | | | RECHERCHIERTE SACHGEBIETE (Int.Cl.6)<br><br>H01G |

Der vorliegende Recherchenbericht wurde für alle Patentansprüche erstellt

| Recherchenort | Abschlußdatum der Recherche | Prüfer |
|---|---|---|
| DEN HAAG | 9.Dezember 1997 | Goossens, A |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
  Dokument

EPO FORM 1503 03.82 (P04C03)